# EUROPEAN PATENT SPECIFICATION

(11) **EP 4 290 700 B1**
(45) Date of publication and mention of the grant of the patent: **25.06.2025**
(21) Application number: 21928777.8
(22) Date of filing: 02.09.2021
(51) Int. Cl.: H01Q 5/42, H01Q 1/24, H01Q 1/52, H01Q 21/26

(54) **MULTI-SYSTEM FUSION ANTENNA ARRAY**
MULTISYSTEMFUSIONSANTENNENANORDNUNG
RÉSEAU D'ANTENNES DE FUSION MULTI-SYSTÈME

(30) Priority: 04.03.2021 CN 202110240941
(43) Date of publication of application: 13.12.2023
(73) Proprietor: CICT Mobile Communication Technology Co., Ltd., Canglong Island, Jiangxia District Wuhan, Hubei 430205 (CN)
(72) Inventor: SUN, Bo, Wuhan, Hubei 430205 (CN); MA, Futao, Wuhan, Hubei 430205 (CN); GAO, Linsen, Wuhan, Hubei 430205 (CN); WEI, Ziqi, Wuhan, Hubei 430205 (CN); YANG, Yaoting, Wuhan, Hubei 430205 (CN); SUN, Yanming, Wuhan, Hubei 430205 (CN); WU, Weihua, Wuhan, Hubei 430205 (CN)
(74) Representative: Studio Torta S.p.A.
(86) International application number: PCT/CN2021/116241
(87) International publication number: WO 2022/183700

(56) References cited:
- CN-A- 107 611 605
- CN-A- 108 448 258
- CN-A- 109 193 176
- CN-A- 110 504 556
- CN-A- 110 504 556
- CN-A- 110 994 201
- CN-A- 110 994 201
- CN-A- 112 909 583
- CN-A- 113 036 452
- CN-B- 107 611 605
- US-A1- 2008 062 062

## Description

### TECHNICAL FIELD

The present application relates to the field of mobile communication equipment, and in particular to a multi-standard integrated antenna array.

### BACKGROUND

With the development of mobile communication technologies, plane resources for mounting an antenna are getting shorter and shorter, and the development of an antenna is focus on becoming smaller, lighter and multi-standard. In order to reduce a size and weight of the antenna and meet requirements for antenna multi-standard, the research on antenna fusion technologies becomes more important.

A traditional multi-standard integrated antenna array includes high-frequency arrays and low-frequency arrays arranged in a staggered manner. During usage, distortion is present in a direction pattern of the high-frequency array, coupling between high-frequency bands low-frequency bands is serious and it is difficult to meet actual requirements. Therefore, how to improve the performance of a multi-standard integrated antenna array without increasing the size of the antenna is a problem that needs to be solved.

CN110504556A provides a multi-frequency antenna array, wherein each row of the multi-frequency antenna array comprises a plurality of high-frequency radiation units and a plurality of low-frequency radiation units; the axial distance between two adjacent rows is D; for any row in the multi-frequency antenna array, the distance between the centers of two adjacent high-frequency radiation units is L; the distance between the centers of two adjacent low-frequency radiation units is n*L; any low-frequency radiation unit is located in the midpoint of the lines between two high-frequency radiation units adjacent to the any low-frequency radiation unit; for any two adjacent rows in the multi-frequency antenna array, any high-frequency radiation unit in the first row is located on the central axis of the lines between two adjacent high-frequency radiation units of the second row; and any low-frequency radiation unit in the first row is located on the central axis of the lines between two adjacent low-frequency radiation units of the second row. The multi-frequency antenna array provided by the embodiment of the invention can effectively reduce the coupling effect between various frequencies and improve the performance index.

CN110994201A relates to a miniaturized multi-system multi-band fusion base station antenna. The antenna comprises a bottom plate, and a reflecting plate and a reflecting plate are respectively arranged on two long edges of the bottom plate; a reflecting plate is arranged on one short edge of the bottom plate; the bottom plate is provided with a first high-frequency radiation antenna array, a third high-frequency radiation antenna array, a first low-frequency radiation antenna array, a fifth high-frequency radiation antenna array, a sixth high-frequency radiation antenna array, a second low-frequency radiation antenna array, a fourth high-frequency radiation antenna array and a second high-frequency radiation antenna array which are sequentially arranged in the direction from the first reflecting plate to the second reflecting plate. Each array comprises a plurality of high-frequency oscillators, high-frequency oscillators, high-frequency oscillators, high-frequency oscillators, high-frequency oscillators, high-frequency oscillators, low-frequency oscillators and low-frequency oscillators which are arrayed into a straight line; and first long isolation strips are arranged between the first high-frequency radiation antenna array and the third high-frequency radiation antenna array and between the fourth high-frequency radiation antenna array and the second high-frequency radiation antenna array.

CN107611605B provides a multi-standard multi-port fusion antenna, comprising a high-frequency antenna array, a high-frequency antenna array and a low-frequency antenna array, the high-frequency antenna array supports horizontal plane beamforming, the high-frequency antenna array does not support horizontal plane beamforming, and the low-frequency antenna array does not support horizontal plane beamforming; a reflector and a reflector are provided, the reflector is higher than the reflector; the high-frequency antenna array is provided on the reflector, and the high-frequency antenna array is placed on the side of the high-frequency antenna array; part or all of the vibrators of the low-frequency antenna array are embedded in the high-frequency antenna array, and the embedded part is not coplanar with the reflector.

### SUMMARY

The present application provides a multi-standard integrated antenna array capable of solving the defects of serious coupling between high-frequency bands and low-frequency bands of the multi-standard integrated antenna array in the related art.

The present application provides a multi-standard integrated antenna array, including a reflection plate, three or more high-frequency arrays and one or more low-frequency arrays, where the high-frequency arrays and the low-frequency arrays are mounted on the reflection plate, each low-frequency array includes one or more cross-shaped low-frequency radiation units, each high-frequency array includes several high-frequency radiation units, each cross-shaped low-frequency radiation unit is embedded in horizontal and vertical central axes of the high-frequency radiation units and a projection of each cross-shaped low-frequency radiation unit on the reflection plate is located outside a projection of each high-frequency radiation unit on the reflection plate.

In the multi-standard integrated antenna array according to the present application, a window-shaped (that is, a shape of four (2*2) squares combined together) low-frequency radiation unit is mounted at a head end and a tail end of each of the low-frequency arrays, respectively.

In the multi-standard integrated antenna array according to the present application, a central axis of the window-shaped low-frequency radiation unit and a central axis of the cross-shaped low-frequency radiation unit are staggered.

In the multi-standard integrated antenna array according to the present application, the high-frequency radiation units, the cross-shaped low-frequency radiation units and the window-shaped low-frequency radiation units are any one of a printed circuit board, a metal die-casting radiation unit, a sheet metal molded radiation unit and a patch radiation unit.

In the multi-standard integrated antenna array according to the present application, the number of the high-frequency arrays is six, the number of the low-frequency arrays is two, and cross-shaped low-frequency radiation units in two low-frequency arrays are embedded in a second row of the high-frequency array and a fifth row of the high-frequency array correspondingly.

In the multi-standard integrated antenna array according to the present application, high-frequency radiation units of a first high-frequency array of the high-frequency arrays and high-frequency radiation units of a second high-frequency array of the high-frequency arrays adjacent to the first high-frequency array are arranged in a staggered manner.

In the multi-standard integrated antenna array according to the present application, a spacing between two adjacent high-frequency radiation units in the same high-frequency array is denoted as L, and a staggered spacing between the high-frequency radiation units in two adjacent high-frequency arrays is 1/2L.

In the multi-standard integrated antenna array according to the present application, a spacing between the cross-shaped low-frequency radiation units is two times of a spacing between high-frequency radiation units in two adjacent high-frequency arrays.

In the multi-standard integrated antenna array according to the present application, a low-frequency baffle is provided between two low-frequency radiation units.

In the multi-standard integrated antenna array according to the present application, the height of the low-frequency baffle is 75 to 85 mm.

In the multi-standard integrated antenna array according to the present application, the cross-shaped low-frequency radiation units are arranged on the horizontal and vertical central axes of the high-frequency radiation units, the width of the antenna with integrated low-frequency arrays and the high-frequency arrays is reduced. In addition, a projection of each cross-shaped low-frequency radiation unit on the reflection plate is located outside the projection of the high-frequency radiation units on the reflection plate, which decreases the coupling between the high-frequency arrays and the low-frequency arrays, and optimizes the performance of the antenna.

### BRIEF DESCRIPTION OF DRAWINGS

To more clearly illustrate solutions of the present application or in the related art, accompanying drawings used in the description of the embodiments or the related art are briefly introduced below. The drawings in the following description only show some embodiments of the present application. For those of ordinary skilled in the art, other drawings can also be obtained based on these drawings without creative effort.
FIG. 1 is a structural view of a multi-standard integrated antenna array according to the present application;
FIG. 2 is a stereogram of a multi-standard integrated antenna array according to the present application;
FIG. 3 is a partial structural view of a multi-standard integrated antenna array according to the present application; and
FIG. 4 is another partial structural view of a multi-standard integrated antenna array according to the present application.

### Reference number:

1: reflection plate; 2: high-frequency array;
20: high-frequency radiation unit;
201: radiation arm for high-frequency radiation unit; 202: base for high-frequency radiation unit; 203: director element for high-frequency radiation unit;
3: low-frequency array;
30: cross-shaped low-frequency radiation unit; 301: base; 302: radiation arm; 303: balun;
31: window-shaped low-frequency radiation unit;4: metal baffle;
5: low-frequency baffle.

### DETAILED DESCRIPTION OF THE EMBODIMENTS

In order to make the objective, solutions and advantages of the present application clearer, the solutions in the present application will be described clearly and completely below in conjunction with the accompanying drawings in the present application. The described embodiments are a part of the embodiments of the present application, and not all of them. Based on the embodiments in the present application, all other embodiments obtained by those of ordinary skilled in the art without making creative labor fall within the scope of protection of the present application.

In the description of the embodiments of the present application, it should be noted that, unless otherwise expressly specified and limited, the terms "first" and "second" are numbered for the purpose of clearly describing the product components and do not imply any substantial difference. The directions of "top", "bottom", "left", and "right" are based on the directions shown in the attached drawings. Those of ordinary skill in the art can understand the specific meanings of the above terms in the embodiments of the present application according to specific situations.

In the description of the present application, it should be noted that the terms "mounted", "connected to" and "connected with" should be understood in a broad sense, unless otherwise expressly specified and limited. For example, it may be fixedly connected or may be detachably connected or integrally connected; it can be mechanical connection or electrical connection; it can be directly connected, or indirectly connected through an intermediate medium, and it can be internal communication between two elements. Those of ordinary skill in the art can understand the specific meanings of the above terms in the embodiments of the present application according to specific situations.

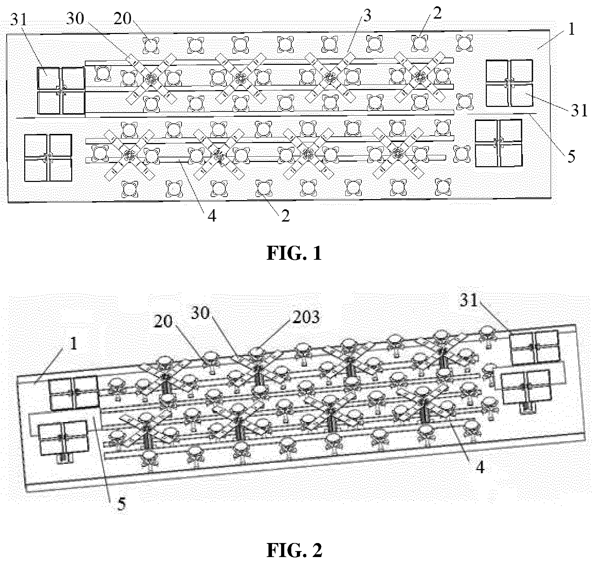

The structure of the multi-standard integrated antenna array according to the present application is described below in conjunction with FIGS. 1 to 4.

As shown in FIGS. 1 and 2, the multi-standard integrated antenna array according to the present application includes a reflection plate 1, three or more high-frequency arrays 2 and one or more low-frequency arrays 3, where the high-frequency arrays 2 and the low-frequency array 3 are mounted on the reflection plate 1. Each low-frequency array 3 includes one or more cross-shaped low-frequency radiation unit 30, each high-frequency array 2 includes several high-frequency radiation units 20, each cross-shaped low-frequency radiation unit 30 is embedded in horizontal and vertical central axes of the high-frequency radiation units 20 and a projection of each cross-shaped low-frequency radiation unit 30 on the reflection plate 1 is located outside the projection of each high-frequency radiation unit 20 on the reflection plate 1.

In the multi-standard integrated antenna array according to the present application, the cross-shaped low-frequency radiation units 30 are arranged on the horizontal and vertical central axes of the high-frequency radiation units 20, the width of the antenna after the fusion of the low-frequency arrays and the high-frequency arrays is reduced. In addition, a projection of each cross-shaped low-frequency radiation unit 30 on the reflection plate is located outside the projection of each high-frequency radiation unit 20 on the reflection plate, the coupling between the high-frequency arrays and the low-frequency arrays is decreased and the performance of the antenna is optimized.

In an embodiment, there are one low-frequency array 3 and three high-frequency arrays 2. The low-frequency array 3 is embedded in the high-frequency arrays 2 located in the middle, each cross-shaped low-frequency radiation unit 30 is located between two adjacent high-frequency radiation units 20 in the high-frequency arrays 2. A horizontal axis of each cross-shaped low-frequency radiation unit 30 overlaps with a horizontal axis of each high-frequency array 2, and a vertical axis of the cross-shaped low-frequency radiation unit 30 coincides with a vertical axis of each high-frequency radiation unit 20. Each cross-shaped low-frequency radiation unit 30 is arranged in the horizontal and vertical central axes of the high-frequency radiation units to reduce the width of the antenna.

In another embodiment, as shown in FIG. 2, there are two low-frequency arrays 3, i.e., the first low-frequency array and the second low-frequency array; and there are six high-frequency arrays 2, i.e., a first row, a second row, a third row, a fourth row, a fifth row and a sixth row arranged from top to bottom. The first low-frequency array is embedded in the second row of high-frequency array 2, the second low-frequency array embedded in the fifth row of high-frequency array 2. The arrangement manner of the cross-shaped low-frequency radiation unit 30 in the high-frequency radiation unit 20 is similar to the arrangement manner of the low-frequency array in the three high-frequency arrays, and will not be repeated.

On the basis of the above embodiments, a window-shaped low-frequency radiation unit 31 is mounted at a head end and a tail end of each of the low-frequency arrays 3, respectively. It should be noted that a window-shaped structure refers to a shape of four squares combined together. That is, a window-shaped low-frequency radiation unit 31 is mounted at a head end and a tail end of the cross-shaped low-frequency radiation unit 30. Due to the window-shaped low-frequency radiation unit 31 having better gain and better wave width indicators, the window-shaped low-frequency radiation unit 31 is combined with the cross-shaped low-frequency radiation unit 30 to form an array, which avoids dispersion of low-frequency horizontal wave in a width direction, improves the overall performance of the low-frequency array and optimizes the coverage effect of the antenna.

As shown in FIG. 2, the transverse axis of the window-shaped low-frequency radiation unit 31 and the transverse axis of the cross-shaped low-frequency radiation unit 30 are staggered. The staggered spacing can be adjusted according to the gain and wave width indicator of the antenna.

As shown in FIG. 2, there are six high-frequency arrays 2, two low-frequency arrays 3. The cross-shaped low-frequency radiation units 30 in two low-frequency arrays 3 are arranged in the second and fifth rows of high-frequency arrays 2 in a staggered manner.

In an embodiment, a low-frequency baffle 5 is provided between two low-frequency radiation units and the height of the low-frequency baffle 5 is 75-85 mm. In an embodiment, the height of the low-frequency baffle 5 is 75 mm. In another embodiment, the height of the low-frequency baffle 5 is 80 mm; and in yet another embodiment, the height of the low-frequency baffle 5 is 85 mm. A metal baffle 4 is an L-shaped plate, a horizontal plate of the metal baffle is fixed with the reflection plate 1, and a vertical plate of the metal baffle 4 is located between two adjacent high-frequency arrays 2. When there are multiple low-frequency arrays 3, a low-frequency baffle 5 is provided between window-shaped low-frequency radiation units 31 of two adjacent low-frequency arrays 3.

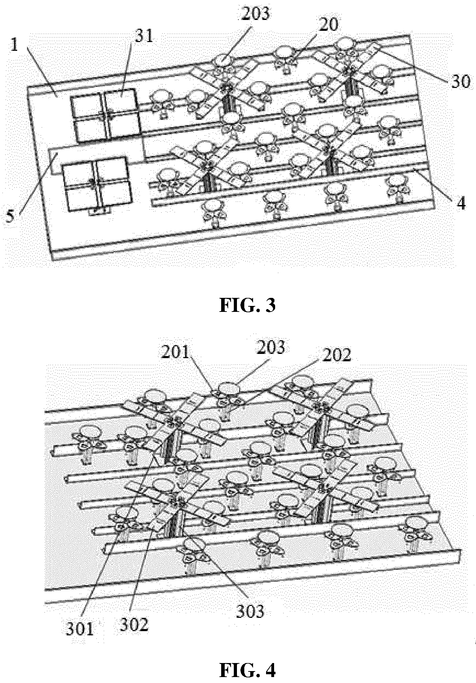

In an embodiment, high-frequency radiation units 20 of a first high-frequency array of the high-frequency arrays 2 and high-frequency radiation units 20 of a second high-frequency array of the high-frequency arrays 2 adjacent to the first high-frequency array are arranged in a staggered manner. As shown in FIGS. 2 and 3, a spacing between two adjacent high-frequency radiation units 20 in the same high-frequency array is L, and a lateral staggered spacing between the high-frequency radiation units 20 in two adjacent rows of high-frequency arrays 2 is 1/2L.

In an embodiment, a spacing between the cross-shaped low-frequency radiation units 30 is two times of a spacing between high-frequency radiation units 20 in two adjacent high-frequency arrays 2. As shown in FIG. 2, a spacing between two adjacent high-frequency radiation units 20 in the same row of high-frequency array is L, and a spacing between two adjacent cross-shaped low-frequency radiation unit in the same low-frequency array 3 is 2L.

In an embodiment, the high-frequency radiation units 20, the cross-shaped low-frequency radiation units 30 and the window-shaped low-frequency radiation units 31 are any one of a printed circuit board, a metal die-casting radiation unit, a sheet metal molded radiation unit and a patch radiation unit. It should be noted that the high-frequency radiation units 20, the cross-shaped low-frequency radiation units 30 and the window-shaped low-frequency radiation units 31 can be the same or different.

As shown in FIGS. 1 and 2, in the multi-standard integrated antenna array according to the embodiment of the present application, the high-frequency arrays 2 include a first high-frequency array, a second high-frequency array, a third high-frequency array, a fourth high-frequency array, a fifth high-frequency array and a sixth high-frequency array arranged sequentially from top to bottom and the low-frequency arrays 3 include a first low-frequency array and a second low-frequency array. Each low-frequency array 3 includes four cross-shaped low-frequency radiation units 30 and two window-shaped low-frequency radiation units 31 located at the head end and tail end of the cross-shaped low-frequency radiation units 30. A low-frequency baffle 4 is provided between the two window-shaped low-frequency radiation units 31 at the corresponding ends. Each high-frequency array 2 includes multiple high-frequency radiation units 20. As shown in FIG. 4, each high-frequency radiation unit 20 includes a radiation arm for high-frequency radiation unit 201, a base for high-frequency radiation unit 202, and a director element for high-frequency radiation unit 203. The cross-shaped low-frequency radiation unit 30 includes a base 301, a radiation arm 302 and a balun 303. An end of the balun 303 is connected with the radiation arm 302, and another end of the balun 303 is connected with base 301.

In an embodiment, the first low-frequency array is arranged in the second high-frequency array, and the second low-frequency array is arranged in the fifth high-frequency array. The transverse central axis of four cross-shaped low-frequency radiation units 30 in each low-frequency array 3 coincides with the transverse central axis of the high-frequency radiation units 20 in a corresponding high-frequency array 2. Each cross-shaped low-frequency radiation unit 30 is arranged between two adjacent high-frequency radiation units 20, that is, a spacing between two adjacent high-frequency radiation units 20 is L, and the spacing between two adjacent cross-shaped low-frequency radiation units 30 is 2L. The transverse central axis of the window-shaped low-frequency radiation units 31 at the head end and tail end and the transverse central axes of the cross-shaped low-frequency radiation units 30 are staggered in a longitudinal direction, and the staggered distance is adjusted according to the performance of the antenna. Cross-shaped low-frequency radiation units 30 in the first low-frequency array and the second low-frequency array are arranged in a staggered manner and a transverse staggered spacing between the cross-shaped low-frequency radiation units 30 is 0.5L. Similarly, the two adjacent rows of high-frequency radiation units 20 are arranged in a staggered manner and a transverse staggered spacing between the high-frequency radiation units 20 is 0.5L. A low-frequency baffle 5is provided between two adjacent rows of low-frequency radiation units and the height of the low-frequency baffle 5 is 75 to 85 mm.

Finally, it should be noted that the above embodiments are only used to illustrate the solutions of the present application, but not to limit them; although the present application has been described in detail in conjunction with the foregoing embodiments, those of ordinary skilled in the art should understand: modifications are made to the solutions described in the foregoing embodiments, and these modifications do not make the essence of the corresponding solutions depart from the scope of the solutions of the embodiments of the present application.

## Claims

1. A multi-standard integrated antenna array, comprising: a reflection plate (1), three or more high-frequency arrays (2) and one or more low-frequency arrays (3),
wherein the high-frequency arrays (2) and the low-frequency arrays (3) are mounted on the reflection plate (1), each low-frequency array (3) comprises one or more cross-shaped low-frequency radiation units (30),
each high-frequency array (2) comprises several high-frequency radiation units (20), each cross-shaped low-frequency radiation unit (30) is embedded in horizontal and vertical central axes of the high-frequency radiation units (20) and a projection of each cross-shaped low-frequency radiation unit (30) on the reflection plate (1) is located outside a projection of each high-frequency radiation unit (20) on the reflection plate (1),
**characterized in that**
further low-frequency radiation unit (31) is mounted at a head end and a tail end of each of the low-frequency arrays (3) respectively, wherein a shape of the low-frequency radiation unit (31) is a 2 by 2 square grid.

2. The multi-standard integrated antenna array of claim 1, wherein a central axis of the further low-frequency radiation unit (31) and a central axis of the cross-shaped low-frequency radiation unit (30) are staggered.

3. The multi-standard integrated antenna array of claim 2, wherein the high-frequency radiation units, the cross-shaped low-frequency radiation units (30) and the further low-frequency radiation units (31) are any one of a printed circuit board, a metal die-casting radiation unit, a sheet metal molded radiation unit and a patch radiation unit.

4. The multi-standard integrated antenna array of claim 1 or 2, wherein the number of the high-frequency arrays (2) is six, the number of the low-frequency arrays (3) is two, and cross-shaped low-frequency radiation units (30) in the two low-frequency arrays (3) are embedded in a second row of the high-frequency array (2) and a fifth row of the high-frequency array (2) correspondingly.

5. The multi-standard integrated antenna array of claim 4, wherein high-frequency radiation units (20) of a first high-frequency array of the high-frequency arrays (2) and high-frequency radiation units (20) of a second high-frequency array of the high-frequency arrays (2) adjacent to the first high-frequency array are arranged in a staggered manner.

6. The multi-standard integrated antenna array of claim 5, wherein a spacing between two adjacent high-frequency radiation units (20) in the same high-frequency array (2) is L, and a traverse staggered spacing between the high-frequency radiation units (20) in two adjacent high-frequency arrays (2) is 1/2L.

7. The multi-standard integrated antenna array of claim 4, wherein a spacing between the cross-shaped low-frequency radiation units (30) is two times of a spacing between the high frequency radiating elements (20) in two adjacent high-frequency arrays (2).

8. The multi-standard integrated antenna array of claim 1, wherein a low-frequency baffle (5) is provided between two low-frequency radiation units.

9. The multi-standard integrated antenna array of claim 8, wherein a height of the low-frequency baffle (5) is 75 to 85 mm.

## Patentansprüche

1. Integriertes Multistandard-Antennenarray, umfassend: eine Reflexionsplatte (1), drei oder mehrere Hochfrequenz-Arrays (2) und ein oder mehrere Niederfrequenz-Arrays (3),
wobei die Hochfrequenz-Arrays (2) und die Niederfrequenz-Arrays (3) auf der Reflexionsplatte (1) montiert sind, jedes Niederfrequenz-Array (3) eine oder mehrere kreuzförmige Niederfrequenz-Strahlungseinheiten (30) umfasst,
jedes Hochfrequenz-Array (2) mehrere Hochfrequenz-Strahlungseinheiten (20) umfasst, jede kreuzförmige Niederfrequenz-Strahlungseinheit (30) in horizontale und vertikale Mittelachsen der Hochfrequenz-Strahlungseinheiten (20) eingebettet ist und eine Projektion jeder kreuzförmigen Niederfrequenz-Strahlungseinheit (30) auf die Reflexionsplatte (1) außerhalb einer Projektion jeder Hochfrequenz-Strahlungseinheit (20) auf die Reflexionsplatte (1) angeordnet ist,
**dadurch gekennzeichnet, dass**
eine weitere Niederfrequenz-Strahlungseinheit (31) jeweils an einem Kopfende und einem Schwanzende jedes der Niederfrequenz-Arrays (3) montiert ist, wobei eine Form der Niederfrequenz-Strahlungseinheit (31) ein 2-mal-2-Quadratraster ist.

2. Integriertes Multistandard-Antennenarray nach Anspruch 1, wobei eine Mittelachse der weiteren Niederfrequenz-Strahlungseinheit (31) und eine Mittelachse der kreuzförmigen Niederfrequenz-Strahlungseinheit (30) versetzt sind.

3. Integriertes Multistandard-Antennenarray nach Anspruch 2, wobei die Hochfrequenz-Strahlungseinheiten, die kreuzförmigen Niederfrequenz-Strahlungseinheiten (30) und die weiteren Niederfrequenz-Strahlungseinheiten (31) eine Leiterplatte, eine Metalldruckgussstrahlungseinheit, eine Blechformstrahlungseinheit und eine Patchstrahlungseinheit sind.

4. Integriertes Multistandard-Antennenarray nach Anspruch 1 oder 2, wobei die Anzahl der Hochfrequenz-Arrays (2) sechs ist, die Anzahl der Niederfrequenz-Arrays (3) zwei ist und kreuzförmige Niederfrequenz-Strahlungseinheiten (30) in den zwei Niederfrequenz-Arrays (3) in einer zweiten Reihe des Hochfrequenz-Arrays (2) und einer fünften Reihe des Hochfrequenz-Arrays (2) entsprechend eingebettet sind.

5. Integriertes Multistandard-Antennenarray nach Anspruch 4, wobei Hochfrequenz-Strahlungseinheiten (20) eines ersten Hochfrequenz-Arrays der Hochfrequenz-Arrays (2) und Hochfrequenz-Strahlungseinheiten (20) eines dem ersten Hochfrequenz-Array benachbarten zweiten Hochfrequenz-Arrays der Hochfrequenz-Arrays (2) versetzt angeordnet sind.

6. Integriertes Multistandard-Antennenarray nach Anspruch 5, wobei ein Abstand zwischen zwei benachbarten Hochfrequenz-Strahlungseinheiten (20) in demselben Hochfrequenz-Array (2) L beträgt und ein versetzter Querabstand zwischen den Hochfrequenz-Strahlungseinheiten (20) in zwei benachbarten Hochfrequenz-Arrays (2) 1/2L beträgt.

7. Integriertes Multistandard-Antennenarray nach Anspruch 4, wobei ein Abstand zwischen den kreuzförmigen Niederfrequenz-Strahlungseinheiten (30) das Zweifache eines Abstands zwischen den Hochfrequenz-Strahlungselementen (20) in zwei benachbarten Hochfrequenz-Arrays (2) beträgt.

8. Integriertes Multistandard-Antennenarray nach Anspruch 1, wobei eine Niederfrequenz-Ablenkplatte (5) zwischen zwei Niederfrequenz-Strahlungseinheiten vorgesehen ist.

9. Integriertes Multistandard-Antennenarray nach Anspruch 8, wobei eine Höhe der Niederfrequenz-Ablenkplatte (5) 75 bis 85 mm beträgt.

## Revendications

1. Réseau d'antennes intégrées multistandard comprenant : une plaque de réflexion (1), trois ou plus réseaux haute fréquence (2) et un ou plusieurs réseaux basse fréquence (3),
dans lequel les réseaux haute fréquence (2) et les réseaux basse fréquence (3) sont montés sur la plaque de réflexion (1), chaque réseau basse fréquence (3) comprend une ou plusieurs unités de rayonnement basse fréquence en forme de croix (30),
chaque réseau haute fréquence (2) comprend plusieurs unités de rayonnement haute fréquence (20), chaque unité de rayonnement basse fréquence en forme de croix (30) est intégrée dans les axes centraux horizontaux et verticaux des unités de rayonnement haute fréquence (20) et une projection de chaque unité de rayonnement basse fréquence en forme de croix (30) sur la plaque de réflexion (1) est située à l'extérieur d'une projection de chaque unité de rayonnement haute fréquence (20) sur la plaque de réflexion (1),
**caractérisé en ce que**
une autre unité de rayonnement basse fréquence (31) est montée respectivement à l'extrémité avant et à l'extrémité arrière de chacun des réseaux basse fréquence (3), l'unité de rayonnement basse fréquence (31) ayant la forme d'une grille carrée de 2 x 2.

2. Réseau d'antennes intégrées multistandard selon la revendication 1, dans lequel l'axe central de l'unité de rayonnement basse fréquence supplémentaire (31) et l'axe central de l'unité de rayonnement basse fréquence en forme de croix (30) sont décalés.

3. Réseau d'antennes intégrées multistandard selon la revendication 2, dans lequel les unités de rayonnement haute fréquence, les unités de rayonnement basse fréquence en forme de croix (30) et les unités de rayonnement basse fréquence supplémentaires (31) sont constituées d'une carte de circuit imprimé, d'une unité de rayonnement en métal coulé sous pression, d'une unité de rayonnement en tôle moulée et d'une unité de rayonnement en patch.

4. Réseau d'antennes intégrées multistandard selon la revendication 1 ou 2, dans lequel le nombre de réseaux haute fréquence (2) est de six, le nombre de réseaux basse fréquence (3) est de deux, et les unités de rayonnement basse fréquence en forme de croix (30) dans les deux réseaux basse fréquence (3) sont intégrées dans une deuxième rangée du réseau haute fréquence (2) et une cinquième rangée du réseau haute fréquence (2) en correspondance.

5. Réseau d'antennes intégrées multistandard selon la revendication 4, dans lequel les unités de rayonnement haute fréquence (20) d'un premier réseau haute fréquence des réseaux haute fréquence (2) et les unités de rayonnement haute fréquence (20) d'un second réseau haute fréquence des réseaux haute fréquence (2) adjacents au premier réseau haute fréquence sont disposées décalées.

6. Réseau d'antennes intégrées multistandard selon la revendication 5, dans lequel un espacement entre deux unités de rayonnement haute fréquence adjacentes (20) dans le même réseau haute fréquence (2) est L, et un espacement décalé transversal entre les unités de rayonnement haute fréquence (20) dans deux réseaux haute fréquence adjacents (2) est 1/2L.

7. Réseau d'antennes intégrées multistandard selon la revendication 4, dans lequel l'espacement entre les unités de rayonnement basse fréquence en forme de croix (30) est deux fois supérieur à l'espacement entre les éléments rayonnants haute fréquence (20) dans deux réseaux haute fréquence adjacents (2).

8. Réseau d'antennes intégrées multistandard selon la revendication 1, dans lequel un déflecteur basse fréquence (5) est prévu entre deux unités de rayonnement basse fréquence.

9. Réseau d'antennes intégrées multistandard selon la revendication 8, dans lequel la hauteur du déflecteur basse fréquence (5) est comprise entre 75 et 85 mm.
